# EUROPEAN PATENT SPECIFICATION

(11) **EP 4 095 117 B1**
(45) Date of publication and mention of the grant of the patent: **21.08.2024**
(21) Application number: 20915607.4
(22) Date of filing: 22.01.2020
(51) Int. Cl.: C05B 17/00, C05F 11/00, C05B 9/00, C05B 7/00

(54) **FERTILISER COMPOSITION INCLUDING STRUVITE AND SYRINGIC ACID AS AN ENHANCER OF THE BIOLOGICAL SOLUBILISATION OF STRUVITE**
DÜNGEMITTELZUSAMMENSETZUNG MIT STRUVITE UND SYRINGSÄURE ALS VERSTÄRKER FÜR DIE BIOLOGISCHE SOLUBILISIERUNG VON STRUVITE
COMPOSITION FERTILISANTE QUI INCLUT DE LA STRUVITE ET DE L'ACIDE SYRINGIQUE COMME POTENTIALISATEUR DE LA SOLUBILISATION BIOLOGIQUE DE LA STRUVITE

(43) Date of publication of application: 30.11.2022
(73) Proprietor: Fertinagro Biotech, S.L., 44195 Teruel (ES)
(72) Inventor: ATARES REAL, Sergio, 44195 Teruel (ES); ROMERO LOPEZ, Joaquin, 44195 Teruel (ES); SALAET MADORRAN, Ignasi, 44195 Teruel (ES); FERRER GINES, Maria, 44195 Teruel (ES); YANCE CHAVEZ, Tula del Carmen, 44195 Teruel (ES); FUERTES DOÑATE, Carlos, 44195 Teruel (ES); CABALLERO MOLADA, Marcos, 44195 Teruel (ES)
(74) Representative: González López-Menchero, Álvaro Luis
(86) International application number: PCT/ES2020/070049
(87) International publication number: WO 2021/148688

(56) References cited:
- EP-A1- 2 904 892
- WO-A1-2010/135814
- WO-A1-2014/198000
- CN-A- 103 848 540
- CN-A- 106 748 135
- US-B2- 8 609 145
- TALBOYS PETER J ET AL: "Struvite: a slow-release fertiliser for sustainable phosphorus management?", PLANT AND SOIL, SPRINGER INTERNATIONAL PUBLISHING, CHAM, vol. 401, no. 1, 11 December 2015 (2015-12-11), pages 109 - 123, XP035849752, ISSN: 0032-079X, [retrieved on 20151211], DOI: 10.1007/S11104-015-2747-3
- UENO Y ET AL: "THREE YEARS EXPERIENCE OF OPERATING AND SELLING RECOVERED STRUVITE FROM FULL-SCALE PLANT", ENVIRONMENTAL TECHNOLOGY, SELPER LTD, GB, vol. 22, 1 January 2001 (2001-01-01), pages 1373 - 1381, XP008038945, ISSN: 0959-3330
- TALBOYS PETER J.; HEPPELL JAMES; ROOSE TIINA; HEALEY JOHN R.; JONES DAVEY L.; WITHERS PAUL J.: "Struvite: a slow-release fertiliser for sustainable phosphorus management?", PLANT AND SOIL, KLUWER ACADEMIC PUBLISHERS, NL, vol. 401, no. 1, 11 December 2015 (2015-12-11), NL, pages 109 - 123, XP035928330, ISSN: 0032-079X, DOI: 10.1007/s11104-015-2747-3

## Description

The present invention relates to a fertiliser composition comprising struvite and syringic acid as an enhancer of the biological solubilisation of struvite, as well as to the use of said fertiliser composition.

More specifically, in a first aspect, the invention provides a fertiliser composition comprising struvite and syringic acid as an enhancer of the biological solubilisation of struvite, wherein the syringic acid in combination with struvite improves phosphorus and magnesium levels in plants, its application constituting an alternative to conventional fertilisers based on phosphorus and/or magnesium.

In a second aspect, the invention relates to a combination of the described fertiliser composition together with an additional fertiliser and/or biostimulant.

Magnesium is an essential element for plants as it is essential for numerous biochemical processes such as chlorophyll biosynthesis, carbon fixation, or protein and nucleic acid synthesis (Jezek M, GeilfusCM, Bayer A,MuhlingKH. Photosynthetic capacity, nutrient status, and growth of maize (Zea mays L.) upon MgSO4 leaf application. Front Plant Sci. 2015;5:781. doi:10.3389/fpls.2014.00781.). However, magnesium deficiencies frequently occur in crops, especially those grown on acidic and sandy soils, as magnesium is a highly mobile nutrient susceptible to leaching and antagonisms with other nutrients occur in these soil types (Hermans C, Vuylsteke M, Coppens F, Cristescu SM, Harren FJM, InzeD, Verbruggen N. Systemsanalysis of the responses to long-term magnesium deficiency and restoration in Arabidopsis thaliana. New Phytol. 2010;187:132-144. doi:10.1111/j.1469-8137.2010.03257.x.).

The relevance of magnesium in agricultural production has been underestimated in recent decades (Cakmak I, Yazici AM (2010) Magnesium: a forgotten element in crop production. Better Crops 94:23-25). The reason why agronomists and scientists fail to pay attention to this element is probably because, in many situations, magnesium deficiency in plants is not identified. While acute magnesium deficiency typically manifests itself with interveinal chlorosis and reduced growth, frequent latent deficiencies, or those occurring at early stages, are often not visible and are therefore difficult to diagnose and negatively affect crop yields (Cakmak and Yazici, 2010).

Phosphorus is an essential macronutrient for plant growth and development, as it is a structural component of molecules such as nucleic acids and membrane phospholipids and is part of compounds involved in energy transfer reactions. Plants absorb this nutrient in its soluble forms, mostly HPO₄²⁻ and H₂PO₄⁻. Phosphorus is, together with nitrogen and potassium, one of the three macronutrients that crops require in greatest quantities and a determining factor in their productivity.

Although most soils contain considerable total phosphorus reserves, only a small fraction of this is dissolved in the soil solution, usually less than 1% and often not enough to maintain proper plant growth (Bünemann et al., "Assessment of gross and net mineralization rates of soil organic phosphorus - A review", Soil Biology and Biochemistry. 89:92-98, 2015).

Therefore, large amounts of phosphate fertilisers need to be applied to agricultural soils to meet crop needs. Such applications are even higher in soils poor in phosphorus or depending on certain physico-chemical factors that influence its assimilability, such as texture and pH.

Furthermore, the abusive or inappropriate use of conventional mineral phosphate fertilisers and the low efficiency of their use by crops (around 45%) lead to a decrease in soil fertility, significant pollution of the environment, mainly in terms of eutrophication in rivers, lakes and aquifers, and an increase in production costs for farmers (Tilman et al., "Agricultural sustainability and intensive production practices", Nature. 418: 671-7, 2002).

In a context in which the members of the United Nations have committed to adopting the 17 Sustainable Development Goals and the Paris Agreement (COP21) to reduce greenhouse gas emissions and climate change (on 1 June 2017, the United States announced its withdrawal from the agreement), as well as to protect and restore the environment and establish responsible and sustainable production and consumption patterns, it is essential to increase the efficiency of resource use in agriculture and minimise its environmental impact. In this regard, the concept of Circular Economy is of particular relevance, which refers to a strategy that aims to redesign, reuse and recycle resources, materials and products, keeping them in economic and ecological flows and minimising waste.

In fact, the agricultural sector is promoting the minimisation of the carbon footprint of fertilisers and increased efficiency in the use of the resources employed. At this juncture, the use of resources from the revaluation of by-products from the food industry or urban waste is an essential activity within the Circular Economy. Materials such as struvite or biochar, considered as waste according to directive 2008/98/EC, can now be used as raw materials for fertilisers in the new directive 2019-1009.

In Spain, more than 155,000 tonnes of phosphorus are consumed in agriculture. The recovery of a large part of this phosphorus from urban and industrial waste and its reuse may constitute in the near future a way to increase efficiency in the use of this resource, as well as to reduce the carbon footprint and pollution problems associated with conventional phosphate fertilisation.

Several studies confirm that struvite, usually obtained from wastewater treatment, can be used as an efficient slow-release fertiliser (Achat DL, Daumer ML, Sperandio M, Santellani AC, Morel C (2014) Solubility and mobility of phosphorus recycled from dairy effluents and pig manures in incubated soils with different characteristics. Nutr Cycl Agroecosyst 99:1-15; Ehmann, A., Bach, I.M., Laopeamthong, S., Bilbao, J., Lewandowski, I., 2017. Can phosphate salts recovered from manure replace conventional phosphate fertilizer? Agric. 7, 1). Struvite is therefore a promising alternative to conventional phosphate fertilisation.

However, the slow release of phosphorus contained in this mineral may not be sufficient to meet the phosphorus demand of plants during the early stages of growth (Kahiluoto, H., Kuisma, M., Ketoja, E., Salo, T., Heikkinen, J., 2015. Phosphorus in manure and sewage sludge more recyclable than in soluble inorganic fertilizer. Environ. Sci. Technol. 49, 2115-2122). Therefore, in order to achieve a similar efficiency in the use of plant nutrients contained in struvite as in conventional phosphate fertilisers, it is necessary to design new technologies.

Some solutions designed to solve the above-mentioned problems in relation to phosphate nutrition of plants consist in the use of metal ions complexed with amino acids to improve phosphorus solubilisation by micro-organisms present in the soil (EP3181538A1), the application of a plant-assimilable phosphorus enhancer based on glyceric acid (PCT/ES2019/070206) or the application of inocula of phosphorus solubilising microorganisms (Hu et al., "Development of a biologically based fertilizer, incorporating Bacillus megaterium A6, for improved phosphorus nutrition of oilseed rape", Can J Microbiol. 59:231-6, 2013; US5256544A; WO2014082167A1).

For the above reasons, there is currently a need in the plant nutrition sector to look for alternatives to conventional phosphate fertilisation that promote the recovery and reuse of phosphorus and minimise the environmental impact of fertilisation, while maintaining or increasing crop productivity in a sustainable way.

Moreover, plants exude through the roots a considerable part of the organic compounds generated in photosynthesis (between 11 and 40%) in order to regulate the chemical composition of the rhizosphere and promote the growth of microorganisms that can provide benefits to the plant in a given ecosystem (Badri and Vivanco, "Regulation and function of root exudates", Plant, Cell and Environment 32, 666-681, 2009; Zhalnina et al., "Phosphorus activators contribute to legacy phosphorus availability in agricultural soils: A review", Science of the Total Environment 612 (2018) 522-537, 2018). Compounds present in root exudates include sugars, amino acids, organic acids, fatty acids and secondary metabolites (Bais et al., "The role of root exudates in rhizosphere interactions with plants and other organisms", Annu Rev Plant Biol. 57:233-66, 2006).

In addition to the cultivated species and its phenological stage, the composition and quantity of these exudates are mainly influenced by environmental signals, e.g., the availability of nutrients in the soil. In fact, plants have mechanisms of adaptation to soils with low levels of assimilable nutrients, including the exudation at root level of metabolites that increase the solubilisation and acquisition of nutrients and/or modulate the composition of soil microbial communities, favouring those microorganisms with the capacity to provide the nutrient that is in short supply. These exudates include carboxylic acids, sugars, phenolic compounds, amino acids and even certain enzymes (Carvalhais et al., "Root exudation of sugars, amino acids, and organic acids by maize as affected by nitrogen, phosphorus, potassium, and iron deficiency", J. Plant Nutr. Soil Sci. 174. Plant Nutr. Soil Sci. 174, 3-11, 2011; Vengavasi and Pandey, "Root exudation index as a physiological marker for efficient phosphorus acquisition in soybean: an effective tool for plant breeding", Crop Pasture Sci. 67, 1096-1109, 2016). High root exudation places an additional burden on the carbon demand of the plant, which for this purpose derives a greater amount of resources generated by its photosynthetic machinery (Vengavasi and Pandey, "Root exudation potential in contrasting soybean genotypes in response to low soil phosphorus availability is determined by photo-biochemical processes", Plant Phys Biochem. 124, 1-9. 2018). For example, in the specific case of phosphorus deficiency, plants release about 30% of the carbon fixed by photosynthesis as root exudates during phosphorus deficiency (Khorassani et al., "Citramalic acid and salicylic acid in sugar beet root exudates solubilize soil phosphorus", BMC Plant Biol. 11, 121, 2011). **GO TO PAGE 5A**

In view of the above, the present invention is based on the above-mentioned approaches so that, on the one hand, by regulating the transformation processes of phosphorus and magnesium contained in struvite, certain organic molecules contained in root exudates can increase the availability of these nutrients for plants and favour the biological solubilisation of these nutrients in agricultural soils. This approach would also constitute an alternative to conventional phosphate and magnesium fertilisers.

Thus, in a first aspect, the present invention provides a fertiliser composition comprising struvite and syringic acid as an enhancer of the biological solubilisation of struvite, wherein the syringic acid increases phosphorus and magnesium levels in Talboys Peter et al, in ""Struvite: a slow-release fertiliser for sustainable phosphorus management?" (PLANT AND SOIL, SPRINGER INTERNATIONAL PUBLISHING, CHAM, vol. 401, no. 1) disclose the use of struvite as a fertilizer composition with an organic acid as oxalic acid, malic acid, acetic acid, and citric acid.

Document CN106748135 discloses a zinc and selenium fertilizer with vitamins, the fertilizer comprising, vitamins, selenium fertilizers, boric acid, syringic acid, tert-octylphenol, calcium chloride, ammonium nitrate and potassium dihydrogen phosphate.

US8609145 provides a water-dispersible particle that includes struvite in an amount ranging from 5% to 99.9% by weight of the total dry weight of the particle together with a binder component in an amount from 1% to 95% by weight. The struvite and the binder component on that contact with water causes particle dispersion into more than 100 pieces.

EP2904892 discloses a method for extracting at least a part of the phosphorous content of a slurry, such as manure, wastewater and/or sludge, and recovering phosphorous and optionally nitrogen from the slurry by precipitating it as ammonium magnesium phosphate (NH₄MgPO₄), wherein a struvite precipitate is collected.

UENO Y et al,, in "Three years experience of operating and selling recovered struvite from full-scale plant" (ENVIRONMENTAL TECHNOLOGY, SELPER LTD, GB, (20010101), vol. 22, ISSN 0959-3330, pages 1373 - 1381) provides a crystallisation reactor for obtaining struvite in order to produce a recyclable phosphorous product. plants.

Syringic acid, or 4-hydroxy-3,5-dimethoxybenzoic acid, is a phenolic compound present in the tissues of certain plants (Shahzad et al., "Effect of syringic acid and syringaldehyde on oxidative stress and inflammatory status in peripheral blood mononuclear cells from patients of myocardial infarction. ", Naunyn Schmiedebergs Arch Pharmacol. 2019).

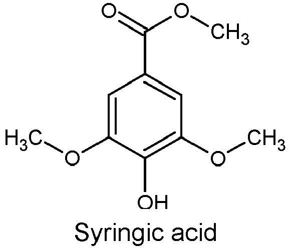

As mentioned above, in a first aspect, the present invention provides a fertiliser composition comprising struvite and syringic acid as an enhancer of the biological solubilisation of struvite.

In view of the examples described hereafter, the increases in biomass and in the phosphorus and magnesium content of plants in soil treated with syringic acid depend on the presence of struvite and are mediated by soil micro-organisms. Without sticking to a particular theory, the present inventors believe that syringic acid promotes the activity of soil micro-organisms capable of solubilising struvite. The data obtained by the inventors suggest that the process of biological solubilisation of struvite in soils differs to some extent from that of other phosphate minerals present in soils, such as calcium phosphates, iron phosphates or aluminium phosphates, since syringic acid has no effect on a conventional agricultural soil, where the aforementioned phosphates are abundant, to which struvite has not been applied. Furthermore, the patent application (PCT/ES2019/070206) has no effect on magnesium assimilation in the presence of struvite.

The fertiliser composition of the invention is in powder form and comprises between 85 and 99.9% by weight of struvite and between 0.1 and 15% of syringic acid.

In another embodiment, the fertiliser composition of the invention comprises between 85 and 99.9% by weight of struvite, between 0.1 and 10% by weight of syringic acid and between 0.5 and 5% by weight of other components selected from the group consisting of sugars, amino acids, organic acids, diamines and polyamines, alcohols, nucleotides and combinations thereof, the fertiliser composition being in the form of powder.

When present in the present fertiliser composition, sugars are preferably selected from mono- and di-saccharides such as sucrose, fructose, trehalose, glucose, arabinose, maltose, as well as mixtures thereof.

When present in the present fertiliser composition, amino acids are preferably selected from threonine, lysine, phenylalanine, glutamic acid, methionine, GABA, ornithine, glycine, glutamine, aspartic acid, serine, asparagine, tyrosine, tryptophan, valine, leucine, isoleucine, proline, 4-hydroxyproline, arginine, histidine, alanine, cysteine, and mixtures thereof.

When present in the present fertiliser composition, organic acids other than syringic acid are preferably selected from lactic acid, succinic acid, oxalic acid, gluconic acid, threonic acid, fumaric acid and mixtures thereof.

The diamines and polyamines, if present in the present composition, are preferably selected from cadaverine, putrescine, spermidine, spermine and mixtures thereof.

The presence of these components other than syringic acid in the composition of the invention is based on the fact that such components are either part of the root exudates in the cultures tested in the absence of magnesium described below or are described in the literature as components of these exudates under normal conditions for plant development (Zhalnina et al., "Dynamic root exudate chemistry and microbial substrate preferences drive patterns in rhizosphere microbial community assembly", Nat Microbiol, 3(4):470-480, 2018), and are therefore desirable for the aforementioned purpose of having a fertiliser composition that can accelerate the biological solubilisation of struvite.

The fertiliser composition of the invention is formulated in powder form, as indicated above, but can also be formulated as an emulsion composition with the addition of water or in granulated form by the addition of granulating agents known to the person skilled in the art.

According to the second aspect, It is disclosed a fertiliser composition as described above in combination with an additional fertiliser selected from among nitrogen fertilisers, potassium fertilisers, calcium fertilisers and amendments, micronutrients, boric acid, leonardite, organic amendments and feldspar, and combinations thereof, and/or in combination with one or more biostimulants selected from the group consisting of amino acid hydrolysates, humic extracts, algae extracts, live micro-organisms, extracts of micro-organisms and combinations thereof. The live micro-organisms or extracts of micro-organisms shall preferably be of the species *Pichia guilliermondii, Azotobacter chroococcum, Azotobacter vinelandii, Azospirillum lipoferum, Bacillus megaterium, Bacillus aryabhattai, Oceanobacillus picturae,* or bacteria belonging to genera recognised for their phosphorus solubilising capacity: *Pseudomonas, Bacillus, Rhizobium, Burkholderia, Achromobacter, Agrobacterium, Micrococcus, Aerobacter, Flavobacterium, Mesorhizobium, Azotobacter, Azospirillum, Erwinia, Paenibacillus and Oceanobacillus* (Rodriguez and Fraga, "Phosphate solubilizing bacteria and their role in plant growth promotion", Biotechnology Advances 17 (1999) 319-339, 1999; El-Tarabily and Youssef, "Enhancement of morphological, anatomical and physiological characteristics of seedlings of the mangrove Avicennia marina inoculated with a native phosphate-solubilizing isolate of Oceanobacillus picturae under greenhouse conditions", Plant Soil (2010) 332:147-162, 2010; Zhu et al., 2018, *supra*)*.*

In this case, the composition of the invention is present in the combination in a proportion of 10 to 60% by weight.

In one embodiment which is not part of the invention, the additional nitrogen fertiliser is present in the combination in a proportion of 5 to 90% by weight and is selected from urea, ammonium nitrosulphate, potassium nitrate, ammonium sulphate, ammonium nitrate, calcium nitrate.

In yet another embodiment which is not part of the invention, the additional potassium fertiliser is present in the combination in a proportion of 5 to 90% by weight and is selected from potassium chloride, potassium sulphate and potassium hydroxide.

In another embodiment which is not part of the invention, the additional calcium fertiliser is present in the combination in a proportion of 5 to 90% by weight and is selected from calcium chloride, calcium cyanamide, calcium sulphate, dolomite, limestone, calcium oxide, calcium hydroxide.

In yet another embodiment which is not part of the invention, the additional micronutrient fertiliser is present in the combination in a proportion of 1 to 30% by weight and is selected from ferric sulphate, zinc sulphate, manganese sulphate, copper sulphate, ammonium molybdate, cobalt chloride or micronutrients (iron, magnesium, zinc, manganese, copper) combined with complexing agents (humates, citrate, gluconates, heptagluconates and amino acids) or with chelating agents (ethylenediaminetetraacetic acid EDTA, ethylenediamine-di(o-hydroxyphenyl acetic acid) EDDHA, diethylenetriaminepentaacetic acid DPTA).

In a further embodiment which is not part of the invention, boric acid as an additional fertiliser is present in the combination in a proportion of 1 to 30% by weight.

In another embodiment which is not part of the invention, leonardite as an additional fertiliser is present in the combination in a proportion of 5 to 90% by weight.

In another embodiment which is not part of the invention, the additional organic amendment is present in the combination in a proportion of 5 to 90% by weight and is selected from cattle manure, sheep manure, pig manure, mink manure, rabbit manure and poultry manure.

In a further embodiment which is not part of the invention, feldspar as an additional fertiliser is present in the combination in a proportion of 5 to 90% by weight.

In the case of the combination of the fertiliser composition of the invention with biostimulants as described above, preferably the biostimulants are present in the combination in a proportion of 5 to 90% by weight.

Also it is disclosed the use of the fertiliser compositions described here in powder form, in granular form, in pellet form or in emulsion form.

In case of use of the composition in powder or emulsion form, it is preferably applied in an amount of 0.5 to 20 kg/ha and 0.06 to 1 kg/ha respectively.

In case of use of the composition in combination with an additional fertiliser in the form of granules or pellets, this combination is preferably applied directly in an amount of 75 to 1,500 kg/ha.

### Examples

### 1. Study of the effect of struvite on the growth and magnesium content of maize.

The patent (PCT/ES2019/070206) describes a fertiliser composition including a plant-assimilable phosphorus and calcium enhancer. Given that struvite is a mineral that contains around 28% phosphorus fertiliser units (P₂O₅) and 10% magnesium (16% magnesium fertiliser units MgO), the aim was to test whether the application of this fertiliser composition in combination with struvite in a soil improved the levels of magnesium in plants, which would suggest that the latter has the capacity to promote the solubilisation of this mineral.

An agricultural soil with a sandy loam texture and an assimilable magnesium content of 0.7 ppm was used, which is considered a very deficient level of this element for agricultural practices (Guía práctica de la fertilización racional de los cultivos en España, MAPAMA 2009). This level of assimilable magnesium corresponds to 4.5 kg of MgO per hectare (considering 30 centimetres of arable soil and an average density of 1,300 kg/m³, the mass per hectare would be approximately 3,900 tonnes).

The level of assimilable phosphorus of the soil used was 29.2 ppm, which is a normal level for agricultural practices and corresponds to 261 kg P₂O₅ per hectare. The level of total phosphorus in this soil, including that not available to plants, was 865 ppm (4,064 kg P₂O₅ / ha). The soil was also found to contain an adequate level of all other major plant nutrients, including calcium.

In order to study the solubilisation of struvite under the application of the fertiliser composition described in the patent (PCT/ES2019/070206), different treatments were carried out in pots with 3 kg of soil where maize plants were planted (4 pots per treatment with one plant per pot) and the effect of these on their dry weight and magnesium content was observed after 6 weeks. Together with each of the treatments, a conventional phosphate fertiliser (triple superphosphate at a dose of 100 phosphorus fertiliser units - P₂O₅ - per hectare) was applied to each pot, sufficient to cover the phosphorus requirements of the plants during the trial, in order to prevent differences in phosphate nutrition from interfering with the interpretation of the trial regarding the ability of each of the treatments to provide magnesium to the plants. The effect of the treatments was compared with a negative control (no treatment) and a positive control with a conventional magnesium fertiliser (magnesium sulphate heptahydrate) providing assimilable magnesium to the plants. In the treatments containing struvite or magnesium sulphate the same magnesium fertiliser units 53.3 kg MgO/ha were applied.

The different treatments are described below:
- Control (No treatment).
- Struvite: 333 kg/ha
- Assimilable P and Ca enhancer (PCT/ES2019/070206): 10 kg/ha
- Struvite + Assimilable P and Ca enhancer (PCT/ES2019/070206): 333 + 10 kg/ha
- Magnesium sulphate: 333 kg/ha

The only treatment that statistically significantly improves both maize plant growth and magnesium content is magnesium sulphate, as shown in tables 1 and 2.

**Table 1**

| Dry biomass of maize plants at 6 weeks of growth. | | |
|---|---|---|
| Compound | Dry weight (g) | Standard error |
| Control | 0.72 | ± 0.09 |
| Struvite | 0.77 | ± 0.04 |
| P and Ca enhancer | 0.74 | ± 0.05 |
| Struvite + P and Ca Enhancer | 0.75 | ± 0.07 |
| Mg sulphate | 2.01 | ± 0.06 |

**Table 2**

| Leaf magnesium content of maize plants at 6 weeks of growth. | | |
|---|---|---|
| Compound | Magnesium (% dry weight) | Standard error |
| Control | 0.120 | ± 0.006 |
| Struvite | 0.124 | ± 0.003 |
| P and Ca enhancer | 0.119 | ± 0.005 |
| Struvite + P and Ca Enhancer | 0.125 | ± 0.008 |
| Mg sulphate | 0.218 | ± 0.005 |

The above results indicate that the assimilable P and Ca enhancer described in patent PCT/ES2019/070206 does not improve plant growth or magnesium levels in a situation of phosphorus sufficiency and magnesium deficiency and, therefore, it is demonstrated that struvite, alone or in combination with the fertiliser composition of patent PCT/ES2019/070206, does not improve the assimilation of assimilable magnesium by plants in appreciable quantities during the early stages of maize growth. For this reason, a test was carried out to obtain and identify root exudates in the absence of magnesium with the aim of finding a series of candidate molecules that could act as enhancers of plant-assimilable magnesium from struvite.

### 2. Test for the collection and identification of root exudates in the absence of magnesium

In order to characterise in detail the response of crops to magnesium deficiency and to identify the metabolites exuded by the roots under such a situation, the Applicant analysed the differential exudate profile of two crop species of agronomic interest, maize and tomato, in the absence of magnesium. The test to determine the root exudates emitted in the absence of magnesium is briefly described below.

The procedure, similar to that used by other authors (Naveed et al., 2017, "Plant exudates may stabilize or weaken soil depending on species, origin and time", European Journal of Soil Science) was the same for both maize seeds (variety LG 34.90) and tomato seeds (variety Agora Hybrid F1). The seeds were surface sterilised by washing for 5 minutes in 96% ethanol, followed by 10 minutes in 5% bleach. The seeds were then washed extensively and allowed to hydrate in sterile MilliQ water for 4 hours. For germination, the seeds were placed on a bed of filter paper moistened with sterile MilliQ water. The seeds were left to germinate in darkness for 4 days, after which the seedlings were placed in hydroponic culture trays with the roots immersed in standard Hoagland nutrient solution. Twelve plants were placed in each tray, with three trays (each corresponding to a biological replicate) for the control treatment and another three trays for the magnesium-free treatment. The plants were grown at a temperature and photoperiod of 25°C and 16 h light/22°C and 8 h darkness and a light intensity of 4,000 lux on the surface.

The nutrient solution was replaced with fresh solution every three days and kept aerated at all times by bubbler probes. After 10 days of growth, the plants were subjected to magnesium and phosphorus depletion treatment. For this, three trays were incubated for three days with modified Hoagland solution without magnesium, the remaining three trays were incubated with full solution. After incubation, root exudates were obtained.

The plants were carefully removed from the culture trays and washed with plenty of water, followed by a final wash with distilled water. Plants from each tray were placed in wide-necked flasks containing 200 ml of MilliQ water, the roots being immersed in the water. The plants were incubated in the flasks for 6 hours. Subsequently, the plants were removed and the insoluble material was removed from the solution by filtering with 0.20 µm filters. The filtered material was flash-frozen in liquid nitrogen and freeze-dried. The dried material obtained was weighed and analysed by gas-mass chromatography after derivatisation with methoxyamine and N-methyl-(trimethylsilyltrifluoroacetamide).

Table 3 shows the metabolites exuded by the plants and their ratios under magnesium-free conditions versus control conditions.

**Table 3**

| Increase of metabolites emitted in the absence of magnesium. Ratio -Mg / Mg | | | |
|---|---|---|---|
| Maize | | Tomato | |
| Syringic acid | 19.47 | Lysine | 16.92 |
| GABA | 18.76 | Glutamic acid | 14.45 |
| Serine | 17.14 | Methionine | 13.07 |
| Lysine | 12.35 | Syringic acid | 8.78 |
| Nicotinic acid | 5.80 | Urea | 8.45 |
| Urea | 5.69 | Fructose | 6.23 |
| Glutamic acid | 3.72 | GABA | 6.17 |
| Tyrosine | 3.54 | Aspartic acid | 5.34 |
| Fructose | 2.48 | Nicotinic acid | 5.16 |
| Aspartic acid | 2.46 | Serine | 4.70 |
| Threonic acid | 1.80 | Phosphoric acid | 4.22 |
| Malic acid | 1.61 | Myoinositol | 3.89 |
| Glucose | 1.58 | Glucose | 2.46 |
| Uracil | 1.45 | Threonic acid | 2.31 |
| Phenylalanine | 1.43 | Uracil | 1.91 |
| Valine | 1.37 | Adenine | 1.73 |
| Phosphoric acid | 1.33 | Glutamine | 1.62 |
| Histidine | 1.26 | Malic acid | 1.55 |
| Myoinositol | 1.18 | | |

On the basis of these results, the 9 matching metabolites were selected from the exudates of both cultures whose Magnesium Absence vs Magnesium Sufficiency ratio was greater than 2. These metabolites were: syringic acid, GABA, serine, lysine, nicotinic acid, urea, glutamic acid, fructose and aspartic acid.

### 3. Screening of organic molecules for plant-assimilable magnesium enhancers from struvite

In order to identify compounds that promote the release of plant-assimilable magnesium from struvite, different products consisting of 97.2% struvite and 2.8% of an organic molecule selected from the previous trial were generated. Each product was applied separately at a dose of 343 kg/ha in a pot with 3 kg of soil, maize plants were planted (4 pots per treatment with one plant per pot) and the effect on their dry weight and magnesium content was observed after 6 weeks. The soil used was the same as for Trial 1. The effect of the treatments was compared with a negative control (no treatment) and a positive control with a conventional magnesium fertiliser (magnesium sulphate) at a dose of 333 kg/ha providing assimilable magnesium to the plants. In the treatments containing struvite or magnesium sulphate the same magnesium fertiliser units 53.3 kg MgO/ha were applied.

**Table 4**

| Dry biomass of maize plants at 6 weeks of growth. | | |
|---|---|---|
| Treatment | Dry weight (g) | Standard error |
| Control - | 0.65 | ± 0.07 |
| Struvite | 0.72 | ± 0.05 |
| Struvite + syringic acid | 1.99 | ± 0.06 |
| Struvite + GABA | 1.17 | ± 0.06 |
| Struvite + serine | 1.28 | ± 0.04 |
| Struvite + lysine acid | 0.70 | ± 0.09 |
| Struvite + nicotinic acid | 0.77 | ± 0.05 |
| Struvite + urea | 0.93 | ± 0.04 |
| Struvite + glutamic acid | 1.09 | ± 0.03 |
| Struvite + fructose | 1.21 | ± 0.06 |
| Struvite + aspartic acid | 1.13 | ± 0.08 |
| Magnesium sulphate | 1.86 | ± 0.05 |

**Table 5**

| Leaf magnesium content of maize plants at 6 weeks of growth. | | |
|---|---|---|
| Treatment | Magnesium (% dry weight) | Standard error |
| Control | 0.117 | ± 0.010 |
| Struvite | 0.123 | ± 0.008 |
| Struvite + syringic acid | 0.220 | ± 0.011 |
| Struvite + GABA | 0.172 | ± 0.006 |
| Struvite + serine | 0.178 | ± 0.007 |
| Struvite + lysine acid | 0.122 | ± 0.012 |
| Struvite + nicotinic acid | 0.129 | ± 0.009 |
| Struvite + urea | 0.146 | ± 0.008 |
| Struvite + glutamic acid | 0.153 | ± 0.005 |
| Struvite + fructose | 0.167 | ± 0.009 |
| Struvite + aspartic acid | 0.165 | ± 0.006 |
| Magnesium sulphate | 0.209 | ± 0.007 |

The above results indicate that syringic acid is the metabolite which, in combination with struvite, improves growth and magnesium content of maize to a greater extent, achieving greater increases than in the conventional magnesium fertiliser treatment.

### 4. Testing of syringic acid as an enhancer of plant-assimilable magnesium and phosphorus from struvite and the mediation of soil micro-organisms.

To verify that the effect of syringic acid depends on the presence of struvite, the effect of the application of only syringic acid (without struvite) on the dry weight and magnesium content of maize plants after 6 weeks was studied. Also, since struvite contains 28% phosphorus and its biological solubilisation in the soil could increase the availability of phosphorus for the plants, the phosphorus content of the plants was studied. On the other hand, to prove that the increase in growth and in magnesium levels, and phosphorus levels if applicable, in plants is mediated by micro-organisms, the effect of struvite and struvite with syringic acid in sterilised soils (free of micro-organisms, Soilₑₛₜ ) was studied. The soils were sterilised by fumigation with chloroform.

The different treatments are described below:
- Control (No treatment).
- Struvite: 333 kg/ha
- Syringic acid: 10 kg/ha
- Mixture of struvite (97.2%) and syringic acid (2.8%): 343 kg/ha
- Magnesium sulphate (16% MgO): 333 kg/ha for 53.3 kg/ha of MgO.
- Triple superphosphate (46% P₂O₅): 202 kg/ha for 93 kg/ha P₂O₅.
- Magnesium Sulphate 333 kg/ha and Triple Superphosphate 202 kg/ha.
- Soil est
- Soilₑₛₜ + struvite at 333 kg/ha
- Soilₑₛₜ + mixture of struvite (97.2%) and syringic acid (2.8%) at 343 kg/ha

As shown in tables 6, 7 and 8, struvite and syringic acid alone did not statistically significantly improve growth or magnesium and phosphorus content of maize compared to the control. However, the mixture of struvite and syringic acid was able to increase both growth and magnesium and phosphorus content in a very similar way to conventional fertilisation with magnesium sulphate and triple superphosphate. The mixture of struvite and syringic acid improved growth to a greater extent than conventional fertilisers alone and, in addition, produced increases in the magnesium and phosphorus content of the plants very similar to those produced by applying magnesium sulphate and triple superphosphate separately, respectively.

**Table 6**

| Dry biomass of maize plants at 6 weeks of growth. | | |
|---|---|---|
| Treatment | Dry weight (g) | Standard error |
| Control - | 0.63 | ± 0.04 |
| Struvite | 0.68 | ± 0.04 |
| Syringic acid | 0.64 | ± 0.06 |
| Struvite + syringic acid | 2.03 | ± 0.07 |
| Magnesium sulphate | 1.82 | ± 0.05 |
| Triple superphosphate | 0.74 | ± 0.06 |
| Magnesium sulphate + triple superphosphate | 2.05 | ± 0.04 |
| Soilₑₛₜ | 0.56 | ± 0.08 |
| Soilₑₛₜ + struvite | 0.54 | ± 0.10 |
| Soilₑₛₜ + struvite + syringic acid | 0.57 | ± 0.09 |

**Table 7**

| Leaf magnesium content of maize plants at 6 weeks of growth. | | |
|---|---|---|
| Treatment | Magnesium (% dry weight) | Standard error |
| Control - | 0.113 | ± 0.008 |
| Struvite | 0.115 | ± 0.007 |
| Syringic acid | 0.113 | ± 0.006 |
| Struvite + syringic acid | 0.222 | ± 0.008 |
| Magnesium sulphate | 0.212 | ± 0.009 |
| Triple superphosphate | 0.137 | ± 0.005 |
| Magnesium sulphate + triple superphosphate | 0.226 | ± 0.010 |
| Soilₑₛₜ | 0.098 | ± 0.009 |
| Soilₑₛₜ + struvite | 0.098 | ± 0.007 |
| Soilₑₛₜ + struvite + syringic acid | 0.101 | ± 0.006 |

**Table 8**

| Leaf phosphorus content of maize plants at 6 weeks of growth. | | |
|---|---|---|
| Treatment | Phosphorus (% dry weight) | Standard error |
| Control - | 0.20 | ± 0.02 |
| Struvite | 0.21 | ± 0.01 |
| Syringic acid | 0.19 | ± 0.03 |
| Struvite + syringic acid | 0.28 | ± 0.02 |
| Magnesium sulphate | 0.23 | ± 0.01 |
| Triple superphosphate | 0.29 | ± 0.03 |
| Magnesium sulphate + triple superphosphate | 0.29 | ± 0.03 |
| Soilₑₛₜ | 0.17 | ± 0.03 |
| Soilₑₛₜ + struvite | 0.16 | ± 0.04 |
| Soilₑₛₜ + struvite + syringic acid | 0.17 | ± 0.02 |

These results indicate that syringic acid has the ability to increase magnesium and phosphorus assimilation by the plant and that its effect depends on the presence of struvite in the soil. Likewise, the mixture of struvite and syringic acid had no effect on sterilised soil, indicating that the effect of the struvite/syringic acid mixture depends on the micro-organisms present in the soil. In order to determine whether the increase in magnesium content in the treatments studied is due to an increase in the availability of assimilable magnesium for the plants, a magnesium balance was carried out in the trial.

In trial 4, the same agricultural soil was used as in trial 1, with an assimilable magnesium content of 0.7 mg/kg, so that each pot with 3 kg of soil contains 2.1 mg of assimilable magnesium.

Only the magnesium sulphate treatments provide magnesium that can be assimilated by the plants. Taking into account the dry weight of the biomass of the maize and tomato plants (see Table 6) and the percentage of total magnesium in the plants (Table 7), the mg of magnesium present in the biomass obtained by each plant can be calculated (Table 9). As can be seen, the amount of magnesium in the dry biomass is higher than 2.1 mg both in the treatment with struvite + syringic acid in non-sterilised soil and in the treatments with magnesium sulphate. In the other treatments, the magnesium content of the plants is lower than 2.1 mg. These data indicate that the struvite + syringic acid treatment has, in non-sterilised soil, the capacity to increase the availability of assimilable magnesium for the plants. This increase in assimilable magnesium from the treatment with struvite and syringic acid suggests that syringic acid promotes the biological solubilisation of struvite, which would also explain the increase in phosphorus in plants (Table 8) thanks to the fertiliser composition with struvite and biological solubilisation enhancer of struvite.

**Table 9**

| Magnesium balance in maize plants. | |
|---|---|
| Treatment | Mg of Mg in dry biomass/plant |
| Control | 0.71 |
| Struvite | 0.78 |
| Syringic acid | 0.72 |
| Struvite + syringic acid | 4.51 |
| Magnesium sulphate | 3.86 |
| Triple superphosphate | 1.01 |
| Magnesium sulphate + triple superphosphate | 4.63 |
| Soilₑₛₜ | 0.55 |
| Soilₑₛₜ + struvite | 0.53 |
| Soilₑₛₜ + struvite + syringic acid | 0.58 |

### 5. Application of the fertiliser composition and combination of the invention

Three fertiliser compositions in powder form according to the invention were prepared with the following composition:
A: 97.2% struvite and 2.8% by weight of syringic acid.
B: 97.2% struvite and 2.8% by weight of the combination of 30-80% syringic acid, 5-30% serine, 5-30% fructose and 5-30% nicotinic acid.
C: 97.2% struvite and 2.8% by weight of the combination of 30-80% syringic acid, 5-30% GABA, 5-30% glucose and 5-30% citric acid.

These products (A, B, C) were tested in field trials on maize and tomato plants and compared with a negative control (no treatment), a struvite treatment and a positive control of conventional magnesium and phosphate fertilisation consisting of magnesium sulphate and triple superphosphate (D). The doses and mode of application were as follows:
- For maize:
   - A: 343 kg/ha via granular fertiliser.
   - B: 343 kg/ha via granular fertiliser.
   - C: 343 kg/ha via granular fertiliser.
   - D: Magnesium Sulphate 333 kg/ha and Triple Superphosphate 202 kg/ha.
- For tomato, the fertiliser units of the different treatments were reduced to 43 MgO and 75 P₂O₅:
   - A: 277 kg/ha via granular fertiliser.
   - B: 277 kg/ha via granular fertiliser.
   - C: 277 kg/ha via granular fertiliser.
   - D: Magnesium Sulphate 269 kg/ha and Triple Superphosphate 163 kg/ha

Treatments A-D significantly improved yield and phosphorus and magnesium content of maize (Tables 10, 11 and 12) as well as of tomato (Tables 13, 14 and 15) compared to the control and struvite treatment. Treatment B increased the above parameters to a greater extent than treatments A and C and showed comparable results to the treatment with conventional phosphate and magnesium fertilisation D.

**Table 10**

| Maize yield (Tn grain/ha). | |
|---|---|
| Control | 8.62 |
| Struvite | 9.08 |
| A | 9.95 |
| B | 10.31 |
| C | 10.09 |
| D | 10.25 |

**Table 11**

| Total phosphorus concentration in maize (%). | |
|---|---|
| Control | 0.21 |
| Struvite | 0.25 |
| A | 0.30 |
| B | 0.33 |
| C | 0.31 |
| D | 0.33 |

**Table 12**

| Total magnesium concentration in maize (%). | |
|---|---|
| Control | 0.115 |
| Struvite | 0.171 |
| A | 0.228 |
| B | 0.248 |
| C | 0.231 |
| D | 0.249 |

**Table 13**

| Tomato yield (Tn/ha). | |
|---|---|
| Control | 46.40 |
| Struvite | 50.3 |
| A | 55.8 |
| B | 58.20 |
| C | 56.40 |
| D | 57.90 |

**Table 14**

| Total phosphorus concentration in tomato (%). 2nd bunch | |
|---|---|
| Control | 0.15 |
| Struvite | 0.18 |
| A | 0.23 |
| B | 0.26 |
| C | 0.24 |
| D | 0.25 |

**Table 15**

| Total magnesium concentration in tomato (%). 2nd bunch | |
|---|---|
| Control | 0.119 |
| Struvite | 0.125 |
| A | 0.133 |
| B | 0.140 |
| C | 0.133 |
| D | 0.137 |

## Claims

1. A fertiliser composition comprising struvite and an enhancer of the biological solubilisation of struvite, syringic acid, **characterised in that** it is in powder form and comprises 85 to 99.9% by weight of struvite and 0.1 to 15% by weight of syringic acid.

2. The fertilising composition according to claim 1, **characterised in that** it comprises between 85 and 99.9% by weight of struvite, between 0.1 and 10% by weight of syringic acid and between 0.5 and 5% by weight of other components selected from the group consisting of sugars, amino acids, organic acids, diamines and polyamines, alcohols, nucleotides and combinations thereof.

3. The fertiliser composition according to claim 2, **characterised in that** the sugars are selected from mono- and di-saccharides, preferably sucrose, fructose, trehalose, glucose, arabinose, maltose, as well as mixtures thereof.

4. The fertiliser composition according to claim 2, **characterised in that** the amino acids are selected from threonine, lysine, phenylalanine, glutamic acid, methionine, GABA, ornithine, glycine, glutamine, aspartic acid, serine, asparagine, tyrosine, tryptophan, valine, leucine, isoleucine, proline, 4-hydroxyproline, arginine, histidine, alanine, cysteine, and mixtures thereof.

5. The fertilising composition according to claim 2, **characterised in that** the organic acids other than syringic acid are selected from lactic acid, succinic acid, oxalic acid, gluconic acid, threonic acid, fumaric acid and mixtures thereof.

6. The fertilising composition according to claim 2, **characterised in that** the diamines and polyamines are selected from cadaverine, putrescine, spermidine, spermine and mixtures thereof.

## Patentansprüche

1. Düngemittelzusammensetzung, umfassend Struvit und einen Verstärker der biologischen Solubilisierung von Struvit, Syringasäure, **dadurch gekennzeichnet, dass** sie in Pulverform vorliegt und 85 bis 99,9 Gewichts-% Struvit und 0,1 bis 15 Gewichts-% Syringasäure umfasst.

2. Düngemittelzusammensetzung nach Anspruch 1, **dadurch gekennzeichnet, dass** sie zwischen 85 und 99,9 Gewichts-% Struvit, zwischen 0,1 und 10 Gewichts-% Syringasäure und zwischen 0,5 und 5 Gewichts-% an anderen Bestandteilen umfasst, ausgewählt aus der Gruppe bestehend aus Zuckern, Aminosäuren, organischen Säuren, Diaminen und Polyaminen, Alkoholen, Nukleotiden und Kombinationen davon.

3. Düngemittelzusammensetzung nach Anspruch 2, **dadurch gekennzeichnet, dass** die Zucker aus Mono- und Disacchariden, vorzugsweise Saccharose, Fructose, Trehalose, Glucose, Arabinose, Maltose, sowie Mischungen davon ausgewählt sind.

4. Düngemittelzusammensetzung nach Anspruch 2, **dadurch gekennzeichnet, dass** die Aminosäuren aus Threonin, Lysin, Phenylalanin, Glutaminsäure, Methionin, GABA, Ornithin, Glycin, Glutamin, Asparaginsäure, Serin, Asparagin, Tyrosin, Tryptophan, Valin, Leucin, Isoleucin, Prolin, 4-Hydroxyprolin, Arginin, Histidin, Alanin, Cystein und Mischungen davon ausgewählt sind.

5. Düngemittelzusammensetzung nach Anspruch 2, **dadurch gekennzeichnet, dass** die organischen Säuren, die nicht Syringasäure sind, aus Milchsäure, Bernsteinsäure, Oxalsäure, Gluconsäure, Threonsäure, Fumarsäure und Mischungen davon ausgewählt sind.

6. Düngemittelzusammensetzung nach Anspruch 2, **dadurch gekennzeichnet, dass** die Diamine und Polyamine aus Cadaverin, Putrescin, Spermidin, Spermin und Mischungen davon ausgewählt sind.

## Revendications

1. Composition de fertilisation comprenant de la struvite et un activateur de la solubilisation biologique de la struvite, l'acide syringique, **caractérisée en ce qu'**elle se présente sous forme de poudre et **en ce qu'**elle comprend de 85 à 99,9 % en poids de struvite et de 0,1 à 15 % en poids d'acide syringique.

2. Composition fertilisante selon la revendication 1, **caractérisée en ce qu'**elle comprend entre 85 et 99,9 % en poids de struvite, entre 0,1 et 10 % en poids d'acide syringique et entre 0,5 et 5 % en poids d'autres composants choisis dans le groupe constitué par des sucres, des acides aminés, des acides organiques, des diamines et des polyamines, des alcools, des nucléotides et des combinaisons de ceux-ci.

3. Composition de fertilisation selon la revendication 2, **caractérisée en ce que** les sucres sont choisis parmi les monosaccharides et les disaccharides, de préférence le saccharose, le fructose, le tréhalose, le glucose, l'arabinose, le maltose, ainsi que des mélanges de ceux-ci.

4. Composition de fertilisation selon la revendication 2, **caractérisée en ce que** les acides aminés sont choisis parmi la thréonine, la lysine, la phénylalanine, l'acide glutamique, la méthionine, le GABA, l'ornithine, la glycine, la glutamine, l'acide aspartique, la sérine, l'asparagine, la tyrosine, le tryptophane, la valine, la leucine, l'isoleucine, la proline, la 4-hydroxyproline, l'arginine, l'histidine, l'alanine, la cystéine et des mélanges de ceux-ci.

5. Composition fertilisante selon la revendication 2, **caractérisée en ce que** les acides organiques autres que l'acide syringique sont choisis parmi l'acide lactique, l'acide succinique, l'acide oxalique, l'acide gluconique, l'acide thréonique, l'acide fumarique et des mélanges de ceux-ci.

6. Composition fertilisante selon la revendication 2, **caractérisée en ce que** les diamines et les polyamines sont choisies parmi la cadavérine, la putrescine, la spermidine, la spermine et des mélanges de celles-ci.
